# EUROPÄISCHE PATENTANMELDUNG

(11) **EP 3 744 995 A1**
(43) Veröffentlichungstag der Anmeldung: **02.12.2020**
(21) Anmeldenummer: 20174013.1
(22) Anmeldetag: 12.05.2020
(51) Int. Cl.: F16F 1/12, F16F 3/04

(54) **KOPPELEINRICHTUNG UND KRAFTFAHRZEUGSCHEINWERFER MIT KOPPELEINRICHTUNG**

(30) Priorität: 31.05.2019 DE 102019114671
(71) Anmelder: Marelli Automotive Lighting Reutlingen (Germany) GmbH, 72762 Reutlingen (DE)
(72) Erfinder: Hartmann, Andre, 72764 Reutlingen (DE); Schäfer, Jonathan, 72800 Eningen unter Achalm (DE); Mannherz, Mark, 74081 Heilbronn (DE); Fees, Heiner, 74321 Bietigheim-Bissingen (DE)
(74) Vertreter: DREISS Patentanwälte PartG mbB

(57) **Zusammenfassung**

Es wird eine Koppeleinrichtung vorgeschlagen, die Rückwirkungen von einem Antrieb einer verschwenkbaren oder linear verschiebbaren Baugruppe auf den Antrieb minimiert und somit Beschädigungen oder Funktionsstörungen, die durch externe Kräfte, die in die angetriebene Baugruppe eingeleitet werden, bei dem Antrieb verhindern.

## Beschreibung

Die Erfindung betrifft eine Koppeleinrichtung zur kinematischen Kopplung eines Antriebs mit einer schwenkbaren und/oder linear verschiebbaren Baugruppe. Die Koppeleinrichtung überträgt eine Stellbewegung des Antriebs auf eine Baugruppe, insbesondere ein Lichtmodul eines Kraftfahrzeugscheinwerfers. Die Erfindung betrifft weiter einen Kraftfahrzeugscheinwerfer nach dem Anspruch 8 mit einer erfindungsgemäßen Koppeleinrichtung.

Antriebe, die eine lineare Stellbewegung auf eine schwenkbare und/oder linear verschiebbare Baugruppe übertragen, sind in vielen Gebieten der Technik bekannt.

Üblicherweise wird die Stellbewegung des Antriebs mit Hilfe einer starren Koppelstange auf die zu bewegende Baugruppe übertragen. Diese direkte Kopplung ist in vielen Anwendungsfällen völlig ausreichend.

Im Bereich der Kraftfahrzeugscheinwerfer und anderen Anwendungen besteht die Notwendigkeit, den Antrieb vor stoßartigen Überlastungen zu schützen. Wenn der Antrieb einen Elektromotor und ein Getriebe, welches die Drehbewegung eines Elektromotors in eine Linearbewegung umwandelt, umfasst, dann gilt es auch das Getriebe auch vor kurzzeitigen Überlastungen zu schützen.

Bei Kraftfahrzeugscheinwerfern entstehen solche kurzzeitigen Überlastungen zum Beispiel beim Überfahren eines Schlaglochs. Die stoßartig auftretenden Trägheitskräfte des Lichtmoduls, das über die Koppelstange bzw. die Koppeleinrichtung mit dem Antrieb gekoppelt ist, werden auf das Getriebe übertragen und können dort eine kurzzeitige Überlastung verursachen. Dadurch kann das Getriebe Schaden nehmen und die Funktion des Kraftfahrzeugscheinwerfers ist nicht mehr gewährleistet.

Aus der DE 103 32 976 A1 ist ein Schweinwerfer für Kraftfahrzeuge mit einer längenverstellbaren Koppeleinrichtung bekannt. Die Längenverstellbarkeit wird durch eine Gewindestange und eine Gewindemutter realisiert. Die Gewindemutter ist federnd ausgebildet, so dass beim Auftreten unzulässig hoher Kräfte, die Gewindemutter radial auffedert. Dadurch kann die Gewindemutter den Belastungsspitzen ausweichen, indem sie über die Gewindestange "rutscht" und Beschädigungen werden vermieden. Nachteilig an dieser Konstruktion ist, dass der Scheinwerfer nach jedem Ansprechen des Überlastschutzes neu justiert werden muss. Eine ähnliche Konstruktion ist auch aus der EP 2 918 447 A1 bekannt.

Der Erfindung liegt die Aufgabe zugrunde, eine Koppeleinrichtung zur kinematischen Kopplung eines Antriebs mit einer Baugruppe bereitzustellen, die kurzzeitige Überlastungen des Antriebs zuverlässig vermeidet. Gleichzeitig soll eine Neu-Justierung nach jedem Ansprechen der erfindungsgemäßen Koppeleinrichtung vermieden werden.

Diese Aufgabe wird erfindungsgemäß bei einer Koppeleinrichtung zur kinematischen Kopplung eines Antriebs mit einer schwenkbaren und/oder linear verschiebbaren Baugruppe, wobei die Koppeleinrichtung eine Bewegung des Antriebs auf die Baugruppe überträgt, dadurch gelöst, dass die Koppeleinrichtung ein erstes Koppelstück und ein zweites Koppelstück umfasst, dass das erste Koppelstück und das zweite Koppelstück relativ zueinander verschiebbar sind, und dass das erste Koppelstück und das zweite Koppelstück durch eine Kraftbegrenzungseinrichtung miteinander verbunden sind.

Durch die erfindungsgemäße Verschiebbarkeit von erstem Koppelstück und zweitem Koppelstück (in der Regel in der Bewegungsrichtung des Antriebs) relativ zueinander, ist gewährleistet, dass immer dann, wenn unzulässig hohe äußere Kräfte auf die Baugruppe wirken, die Koppeleinrichtung diesen äußeren Kräften nachgeben kann und somit keine unzulässig hohen Kräfte auf den Antrieb, insbesondere dessen Getriebe, wirken.

In erfindungsgemäßer Ausgestaltung der Koppeleinrichtung umfasst die Kraftbegrenzungseinrichtung einen ersten Wegbegrenzer und eine erste Feder, wobei der erste Wegbegrenzer einen Abstand zwischen dem ersten Koppelstück und dem zweiten Koppelstück in einer ersten Bewegungsrichtung des Antriebs begrenzt, wobei die erste Feder zwischen dem ersten Koppelstück und dem ersten Wegbegrenzer angeordnet ist, wobei die Kraftbegrenzungseinrichtung einen zweiten Wegbegrenzer und eine zweite Feder aufweist, wobei der zweite Wegbegrenzer den Abstand zwischen erstem Koppelstück und zweitem Koppelstück in einer der ersten Bewegungsrichtung des Antriebs entgegengesetzten Richtung begrenzt und wobei die zweite Feder zwischen erstem Koppelstück und zweitem Wegbegrenzer oder zwischen erstem Wegbegrenzer und zweitem Wegbegrenzer angeordnet ist.

Die erfindungsgemäße Kraftbegrenzungseinrichtung gewährleistet, dass in beiden Bewegungsrichtungen des Antriebs eine Relativbewegung zwischen zweitem Koppelstück und erstem Koppelstück nicht direkt, sondern über (in der Regel vorgespannte) Federn übertragen wird. Dadurch werden die auf das erste Koppelstück und damit auch die auf den Ausgang des Getriebes wirkenden Kräfte begrenzt. Nach dem Abklingen der unzulässig hohen äußeren Kräfte sorgen die Federn dafür, dass die Koppeleinrichtung ihren Ursprungszustand wieder einnimmt; eine Neu-Justierung ist nicht erforderlich.

In einer vorteilhaften Ausgestaltung der Erfindung ist die Koppelenrichtung in der Art eines Teleskops aufgebaut. Der erste Wegbegrenzer und/oder der zweite Wegbegrenzer können einen rohrförmigen Grundkörper mit jeweils zwei Stirnflächen aufweisen. Die Wegbegrenzer sind koaxial zueinander angeordnet und nehmen ein Endstück des ersten Koppelstücks auf. Das zweite Koppelstück ist in der Regel außen an dem zweiten Wegbegrenzer angeordnet.

Durch die teleskopartige Bauweise ist der Bauraumbedarf sehr gering und die Führung von erstem Koppelstück und zweitem Koppelstück relativ zueinander ist gewährleistet. Weil durch diese Bauweise eine Linearführung der beteiligten Bauteile realisiert wird, wird ein "seitliches" Ausweichen oder Ausknicken der Koppeleinrichtung verhindert.
In vorteilhafter Ausgestaltung der Erfindung ist die erste Feder zwischen dem Endstück des ersten Koppelstücks und einer Stirnfläche des ersten Wegbegrenzers angeordnet. In entsprechender Weise ist die zweite Feder zwischen dem Endstück des ersten Koppelstücks bzw. einer Stirnfläche des ersten Wegbegrenzers und einer Stirnfläche des zweiten Wegbegrenzers angeordnet. Durch die Integration der Federn in die Wegbegrenzer, wird eine axiale Kraftübertragung zwischen den beteiligten Bauelementen (erstes Koppelstück, zweites Koppelstück, erster Wegbegrenzer und zweiter Wegbegrenzer) gewährleistet. Außerdem sind die Federn und alle beteiligten Bauteile vor Verschmutzungen, Schnee, und Regen geschützt.

Es hat sich als besonders vorteilhaft erwiesen, wenn die erste Feder und/oder die zweite Feder vorgespannt sind. Dann wirkt bis zum Überschreiten der Vorspannkräfte die erfindungsgemäße Koppeleinrichtung wie eine starre Koppelstange. Erst wenn die Vorspannkraft einer der beiden Federn überwunden wird, findet eine Relativbewegung zwischen dem ersten Koppelstück und dem zweiten Koppelstück statt und infolgedessen werden die auf das erste Koppelstück und die einem dem ersten Koppelstück vorgelagerten Antrieb wirkenden Kräfte begrenzt.

Die Federraten der ersten Feder und der zweiten Feder können unterschiedlich sein. Dadurch ist es möglich, das Verhalten der erfindungsgemäßen Koppeleinrichtung in die erste Bewegungsrichtung und die der ersten Bewegungsrichtung entgegengesetzte Richtung des Antriebs verschieden zu gestalten. Das ist immer dann sinnvoll, wenn die zu erwartenden externen Kräfte richtungsabhängig unterschiedlich groß sind.

Die eingangs genannte Aufgabe wird bei einem Kraftfahrzeugscheinwerfer mit einem Gehäuse, mindestens einem Lichtmodul und einem elektrischen Antrieb, wobei das mindestens eine Lichtmodul um eine Achse schwenkbar ist, und wobei zwischen dem Lichtmodul und dem Antrieb eine Koppeleinrichtung angeordnet ist, welche eine Stellbewegung des Antriebs auf das mindestens eine Lichtmodul überträgt, dadurch gelöst, dass die Koppeleinrichtung eine Koppeleinrichtung nach einem der vorhergehenden Ansprüche ist.

In vorteilhafter Ausgestaltung der Erfindung umfasst der Kraftfahrzeugscheinwerfer einen Antrieb mit einem Elektromotor, insbesondere einem Schrittmotor, und ein Getriebe.

In bevorzugter Ausgestaltung der Erfindung ist das Getriebe ein Zahnstangengetriebe oder ein Schneckengetriebe. Diese Getriebe können eine Drehbewegung des Motors in eine lineare Stellbewegung des Antriebs umwandeln. Außerdem können sie selbsthemmend sein, so dass die im Normalbetrieb erforderlichen Haltekräfte über die Selbsthemmung bereitgestellt werden und nicht durch eine dauernde Bestromung des Elektromotors eines Antriebs realisiert werden müssen. Das Getriebe verhindert außerdem, dass die äußeren Kräfte direkt auf den Schrittmotor übertragen werden und schützt ihn somit vor Überlastung und Beschädigung.

In weiterer vorteilhafter Ausgestaltung der Erfindung weist der Kraftfahrzeugscheinwerfer ein Steuergerät und mindestens einen Positionssensor auf, wobei der mindestens eine Positionssensor die Position des Lichtmoduls erfasst und über eine Signalverbindung an das Steuergerät übermittelt. Dann ist ein geschlossener Regelkreis zur Realisierung einer Leuchtweitenregelung vorhanden. Mit Hilfe des Positionssensors kann erkannt werden, ob sich die Einstellung des Lichtmoduls geändert hat. Das ermöglicht eine Funktionskontrolle der erfindungsgemäßen Koppeleinrichtung.

Wenn die Koppeleinrichtung ordnungsgemäß funktioniert, ändert sich die Einstellung des Lichtmoduls nicht, weil die Federn nach dem Abklingen der unzulässig großen äußeren Kräfte die erfindungsgemäße Koppeleinrichtung wieder in ihren Ursprungszustand zurückbewegen.

Ausführungsbeispiele der Erfindung sind in den Zeichnungen dargestellt und werden in der nachfolgenden Beschreibung näher erläutert. Es zeigen, jeweils in schematischer Form:
- Figur 1: einen Scheinwerfer in einer Prinzipskizze;
- Figur 2: die erfindungsgemäße Koppeleinrichtung im normalen Betriebszustand;
- Figuren 3 und 4: die erfindungsgemäße Koppeleinrichtung unter Einwirkung externer Kräfte; und
- Figur 5: ein Kraft-Weg-Diagramm der erfindungsgemäßen Koppeleinrichtung.

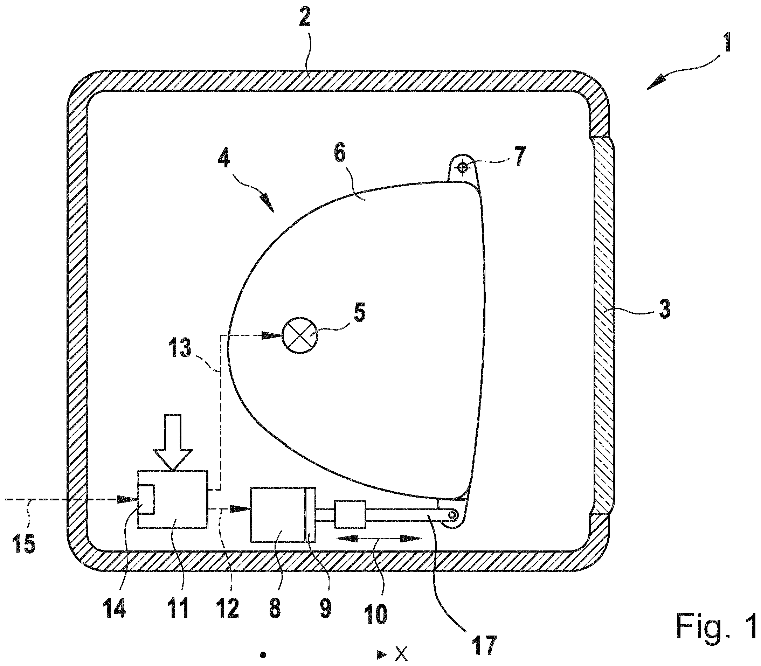

In Figur 1 ist ein Fahrzeugscheinwerfer in seiner Gesamtheit mit dem Bezugszeichen 1 bezeichnet und auf das Wesentliche reduziert dargestellt. Der Scheinwerfer 1 umfasst ein Gehäuse 2 mit einer Lichtaustrittsöffnung 3.

In dem Scheinwerfergehäuse 2 ist ein Lichtmodul 4 angeordnet, das zum Einstellen der Leuchtweite des Scheinwerfers 1 in seiner Neigung verstellbar ist. Das Lichtmodul 4 kann - wie in Figur 1 dargestellt - als Reflexionsmodul oder alternativ als Projektionsmodul ausgebildet sein. Es kann auch mehr als ein Lichtmodul 4 vorhanden sein.

Das Lichtmodul 4 umfasst eine Lichtquelle 5 (z.B. eine Glühfadenlampe, eine Gasentladungslampe, oder mehrere LEDs) und einen Reflektor 6. Das von der Lichtquelle 5 ausgesandte Licht wird durch den Reflektor 6 in Fahrtrichtung vor das Fahrzeug zur Erzeugung einer vorgegebenen Lichtverteilung mit Helldunkelgrenze (z.B. Abblendlicht, Nebellicht, Schlechtwetterlicht, Stadtlicht, Landstraßenlicht, Autobahnlicht, etc.) oder ohne Helldunkelgrenze (z.B. Fernlicht) reflektiert. Die Form des Reflektors 6 ist dabei derart gewählt, dass die gewünschte Lichtverteilung allein durch das reflektierte Licht ohne zusätzliche Blenden im Strahlengang erzeugt wird.

Anstelle des dargestellten Reflexionsmoduls kann der Scheinwerfer 1 auch ein in der Neigung verstellbares Projektionsmodul aufweisen, bei dem von einer Lichtquelle ausgesandtes Licht von einem Reflektor reflektiert, an einer Blendenanordnung mit einer Oberkante vorbei geführt und von einer Projektionslinse auf die Fahrbahn vor das Fahrzeug projiziert wird. Dabei wird die Oberkante der Blendenanordnung als Helldunkelgrenze auf der Fahrbahn abgebildet.

Das Lichtmodul 4 ist zur Justierung und zur Regelung der Leuchtweite (LWR) um eine Drehachse 7 verschwenkbar an dem Gehäuse 2 des Scheinwerfers 1 befestigt. Zum Verstellen der Neigung des Lichtmoduls 4 ist ein Antrieb umfassend einen Elektromotor 8, insbesondere einen Schrittmotor, oder Elektromagnete, und ein Getriebe 9 vorgesehen. Der Motor 8 bildet zusammen mit dem Getriebe 9 den Antrieb und ist über eine schematisch und stark vereinfacht dargestellte erfindungsgemäße Koppeleinrichtung 17 vorzugsweise gelenkig mit dem Lichtmodul 4 gekoppelt. Die Koppeleinrichtung 17 ist einenends mit dem Ausgang des Getriebes 9 und anderenends (gelenkig) mit dem Lichtmodul 4 verbunden.

Das Getriebe 9 wandelt die Drehbewegung des Motors 8 in eine lineare Bewegung 10 zum Einstellen der Neigung des Lichtmoduls 4 um. Das Getriebe 9 kann beispielsweise als Zahnstangetriebe oder als Schneckengetriebe ausgebildet sein.

Der Antrieb 8 wird von einem Steuergerät 11 des Scheinwerfers 1 angesteuert. Das Steuergerät 11 dient zur automatischen Leuchtweitenregulierung des Scheinwerfers 1. Es wird deshalb auch als LWR-Steuergerät bezeichnet.

Zu diesem Zweck sendet das Steuergerät 11 Steuersignale 12 an den Antrieb 8. Das Steuergerät 11 kann auch zur Steuerung der Leuchtfunktion der Lichtquelle 5 dienen. Das Steuergerät 11 weist Versorgungspfade auf, über die Ansteuersignale 15 für den bestimmungsgemäßen Betrieb des Scheinwerfers 1 übertragen werden. Diese werden an eine Kommunikationsschnittstelle 14 des Steuergeräts 11 angelegt. Solche Ansteuersignale 15 sind bspw. Signale für die Leuchtfunktion (Abblendlicht an/aus; Fernlicht an/aus; etc.) sowie Signale von Positionssensoren, welche die Neigung der Karosserie zur Fahrbahn erfassen. Anhand der Signale der Positionssensoren werden die Ansteuersignale 12 für den Antrieb 8 ermittelt, um das Lichtmodul 4 in eine Position zu schwenken, welche eine Neigung der Karosserie kompensiert.

Die Figur 1 zeigt exemplarisch das Zusammenwirken zwischen einem Antrieb mit dem elektrischen Motor 8 und einem Getriebe 9, sowie dem Lichtmodul 4, welches beispielhaft für eine verschwenkbare Baugruppe steht. Außerdem können zur Begrenzung der externen Kräfte mechanische Endanschläge im Scheinwerfer vorgesehen sein. Dadurch werden die auf Getriebe 9 und Antrieb 8 (Schrittmotor) wirkenden Kräfte begrenzt.

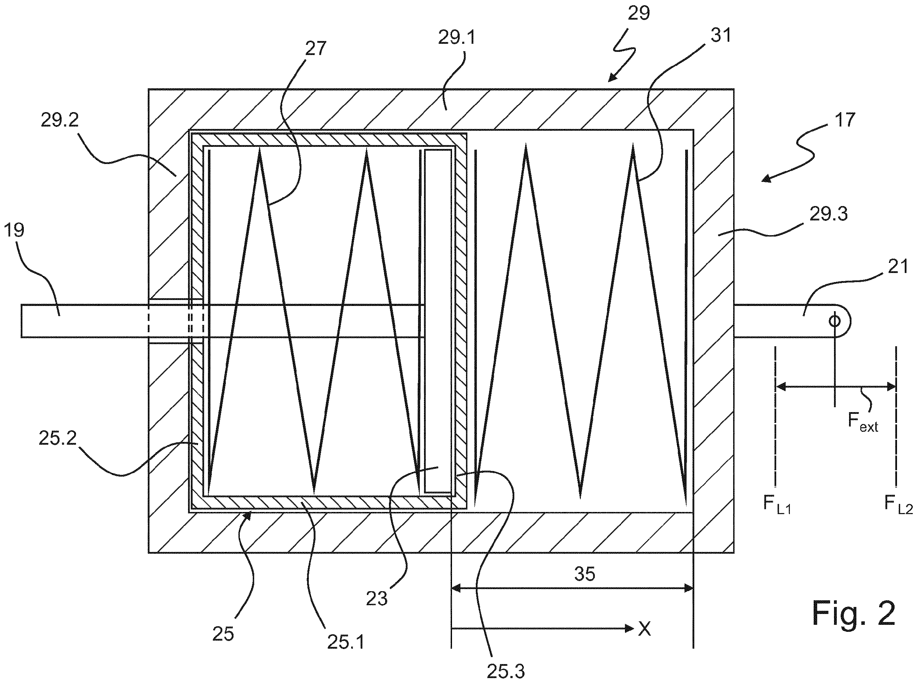

Nachfolgend wird im Zusammenhang mit den Figuren 2 bis 5 Aufbau und Funktion der erfindungsgemäßen Koppeleinrichtung 17 anhand eines Ausführungsbeispiels erläutert. Die Figuren 2 bis 4 zeigen die gleiche Koppeleinrichtung unter dem Einfluss verschiedener äußerer Kräfte Fext. Aus Gründen der Übersichtlichkeit sind nicht in allen Figuren alle Bezugszeichen eingetragen.

Die Figur 2 zeigt ein Ausführungsbeispiel einer erfindungsgemäßen Koppeleinrichtung 17 im Normalbetrieb geschnitten und vereinfacht dargestellt. Die Koppeleinrichtung 17 umfasst ein erstes Koppelstück 19 und ein zweites Koppelstück 21. Das erste Koppelstück 19 kann der Ausgang des Getriebes 9 (siehe Figur 1) sein. Das zweite Koppelstück 21 kann mit dem Lichtmodul 4 gemäß Figur 1 gekoppelt sein. Im Normalbetrieb verhält sich die erfindungsgemäße Koppelenrichtung 17 wie eine starre Stange.

An dem in Figur 2 rechten Ende des ersten Koppelstücks 19 ist ein Endstück 23 angeordnet. Die erfindungsgemäße Koppeleinrichtung weist einen ersten Wegbegrenzer 25 auf. Der erste Wegbegrenzer 25 umfasst bei diesem Ausführungsbeispiel einen rohrförmigen Grundkörper 25.1 und zwei mit ihm verbundene Stirnflächen 25.2 und 25.3. Der erste Wegbegrenzer 25 nimmt das scheibenförmige Endstück 23 des ersten Koppelstücks 19 und eine erste Feder 27 auf. Die erste Feder 27 ist bei diesem Ausführungsbeispiel als Schraubenfeder ausgebildet. Sie ist bevorzugter Weise mit einer vorgegebenen Vorspannung zwischen dem Endstück 23 des ersten Koppelstücks 19 und der Stirnfläche 25.2 des ersten Wegbegrenzers 25 angeordnet bzw. eingespannt. Durch die Länge des Grundkörpers 25.1 ist der Abstand zwischen der Stirnfläche 25.2 des ersten Wegbegrenzers 25 und dem Endstück 23 des ersten Koppelstücks 19 begrenzt. Dadurch ist es auch möglich, die erste Feder 27 mit einer Vorspannung einzubauen.

Das Endstück 23 und der erste Wegbegrenzer 25 sind in einem ebenfalls rohrförmigen zweiten Wegbegrenzer 29 aufgenommen. Der zweite Wegbegrenzer 29 weist bei diesem Ausführungsbeispiel einen Grundkörper 29.1 und zwei Stirnflächen 29.1 und 29.3 auf.

Zwischen dem Endstück 23 bzw. der zweiten Stirnfläche 25.3 des ersten Wegbegrenzers 25 auf der einen Seite und der zweiten Stirnfläche 29.2 des zweiten Wegbegrenzers 29 ist eine zweite Feder 31 angeordnet. Die zweite Feder 31 ist bei diesem Ausführungsbeispiel ebenfalls als Schraubenfeder ausgebildet und mit Vorspannung montiert.

Die erste Stirnfläche 29.2 des zweiten Wegbegrenzers 29 liegt in der in Figur 2 dargestellten Situation an der ersten Stirnfläche 25.2 des ersten Wegbegrenzers 25 an.

Die Stirnflächen 25.2 und 29.2 der Wegbegrenzer 25 und 29 weisen eine Durchgangsöffnung (ohne Bezugszeichen) auf. Durch diese Öffnungen wird das erste Koppelstück 19 aus der erfindungsgemäßen Koppeleinrichtung 17 herausgeführt. Das linke Ende der Koppelstange 19 in Figur 1 ist Teil des Ausgangs des Getriebes 9 oder mit diesem Getriebe verbunden.

Die Figur 2 zeigt den Normalbetrieb der erfindungsgemäßen Koppeleinrichtung 17. Im Normalbetreib greifen nur relativ kleine externe Kräfte Fext an dem zweiten Koppelstück 21 an. Die externen Kräfte Fext können in einer ersten Bewegungsrichtung des Stellantriebs, entsprechend der negativen X-Achse, oder in die entgegengesetzte Richtung, d.h. in Richtung der positiven X-Achse, auf das zweite Koppelstück 21 einwirken.

Solange die externen Kräfte Fext kleiner sind als die vorgegebenen Grenzwerte FL1 in Richtung der negativen X-Achse und FL2 in Richtung der positiven X-Achse, verhält sich die erfindungsgemäße Koppeleinrichtung wie eine starre Stange. Die Grenzwerte FL1 und FL2 werden durch die Vorspannungen der ersten Feder 27 und der zweiten Feder 31 konstruktiv vorgegeben. Sie können entsprechend dem Einsatzgebiet der erfindungsgemäßen Koppeleinrichtung angepasst werden.

In den Figuren 2 bis 4 verändert das erste Koppelstück 19 und mit ihm dessen Endstück 23 seine Lage nicht. Das bedeutet, dass der Antrieb keine Stellbewegung ausführt. Daher ist ein Ursprung der X-Achse in den genannten Figuren bei dem Endstück 23 angesetzt. Wenn der Antrieb eine Stellbewegung ausführt, dann wandert der Ursprung der X-Achse mit dem ersten Koppelstück 19 mit.

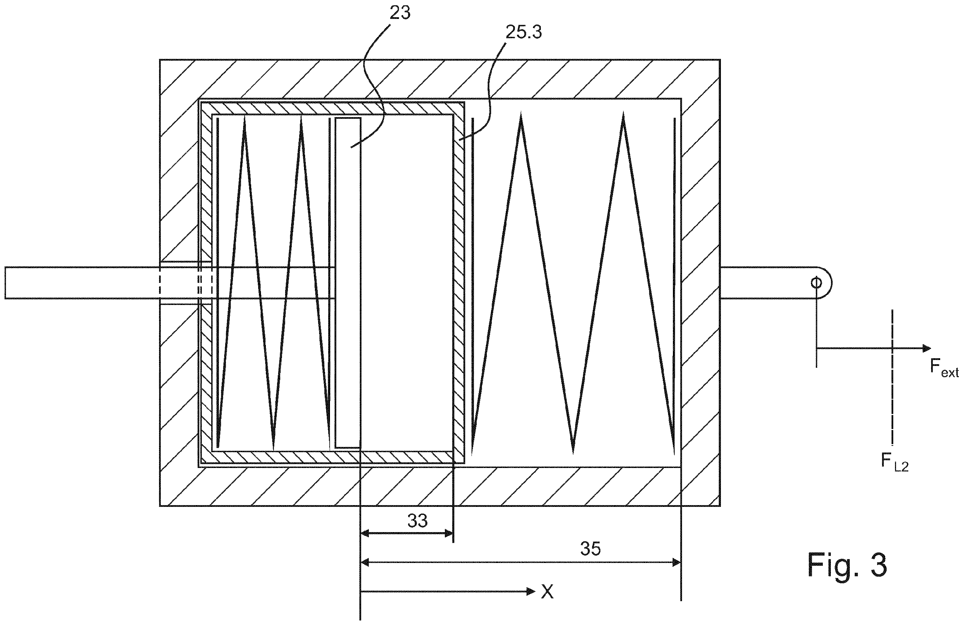

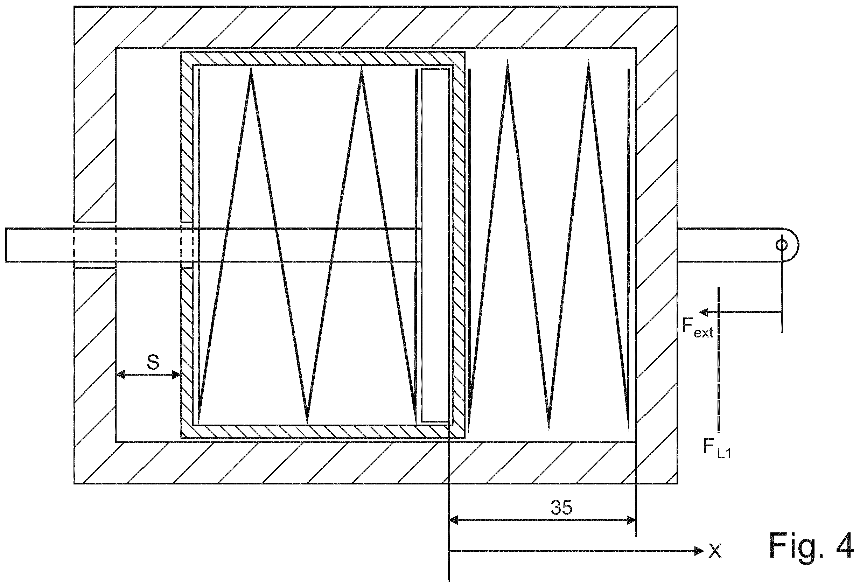

Anhand der Figuren 3 und 4 wird die Funktion der erfindungsgemäßen Koppeleinrichtung erläutert. Dabei werden die Relativbewegungen von erstem Wegbegrenzer 25 und zweitem Wegbegrenzer 29 bezogen auf das Endstück 23 des ersten Koppelstücks 19 veranschaulicht.

In der Figur 3 ist eine Situation dargestellt, bei der auf das zweite Koppelstück 21 eine externe Kraft Fext in Richtung der positiven X-Achse wirkt. Der Betrag dieser Kraft Fext ist größer als der Grenzwert FL2. Infolgedessen bewegt das zweite Koppelstück 21 den ersten Wegbegrenzer 29 und den zweiten Wegbegrenzer 25 in Richtung der positiven X-Achse. Der Betrag dieser Bewegung ist durch einen Doppelpfeil 33 in der Figur 3 angedeutet. Der Abstand zwischen der zweiten Stirnfläche 29.3 und dem Endstück 23 hat sich dadurch ebenfalls vergrößert. Dies ergibt sich aus dem Vergleich der Längen der Pfeile 35 in den Figuren 2 und 3.

Durch die Relativbewegung der Wegbegrenzer 25 und 29 bezogen auf das Endstück 23 wird die erste Feder 27 zusammengedrückt, so dass die von ihr ausgeübte Federkraft entsprechend ihrer Federkennlinie zugenommen hat. Wie bereits erwähnt, bleibt das Endstück 23 des ersten Koppelstücks 19 im Ursprung der X-Achse (X= 0). Die Spannung der zweiten Feder 31 bleibt unverändert, weil sich der erste Wegbegrenzer 25 und der zweite Wegbegrenzer 29 um den gleichen Betrag bewegt haben, so dass ihre relative Lage zueinander unverändert bleibt.

In der Figur 4 ist die Situation dargestellt, dass eine externe Kraft Fext in einer in Richtung der negativen X-Achse auf das zweite Koppelstück 21 wirkt. Diese externe Kraft Fext ist größer als der Grenzwert FL1. Unter dem Einfluss der externen Kraft Fext bewegt sich der zweite Wegbegrenzer 29 in der Figur 4 nach links und drückt die zweite Feder 31 zusammen.

In der Figur 4 ist der Abstand 35 zwischen dem Endstück 23 und der zweiten Stirnfläche 29.3 des zweiten Wegbegrenzers 29 kleiner als in dem in der Figur 2 dargestellten Normalzustand. Das ergibt sich aus dem Vergleich der Längen der Doppelpfeile 35 in den Figuren 2 und 4.

Der erste Wegbegrenzer 25 macht diese Bewegung des zweiten Wegbegrenzers 29 nicht mit. Er bleibt mit seiner zweiten Stirnfläche 25.3 in Anlage an dem Endstück 23 des ersten Koppelstücks 19. Die Vorspannung der ersten Feder 27 bleibt ebenfalls unverändert.

Sobald die exemplarisch anhand der Figuren 3 und 4 angedeuteten externen Kräfte FEXT verschwinden, richtet sich die erfindungsgemäße Koppeleinrichtung von alleine, d.h. angetrieben durch die Federn 31 bzw. 27 wieder aus, bis die Koppeleinrichtung 17, die in der Figur 2 dargestellte Normalposition eingenommen hat.

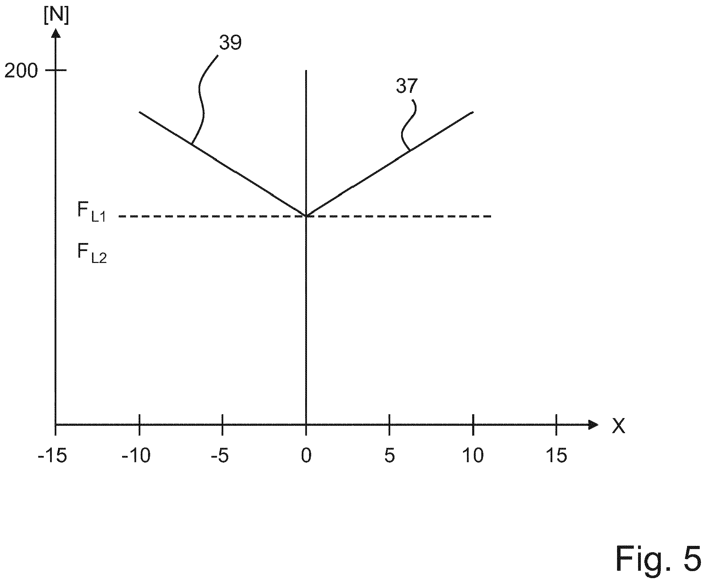

Anhand der Figur 5 wird das Betriebsverhalten der erfindungsgemäßen Koppeleinrichtung anhand eines Diagramms erläutert.

Auf der X-Achse des Diagramms in der Figur 5 ist die Relativbewegung des ersten Wegbegrenzers 25 und des zweiten Wegbegrenzers 29 relativ zu dem Endstück 23 dargestellt.

Auf der Y-Achse ist die Kraft der Federn 27 und 31 aufgetragen. Der Grenzwert FL1¬ bzw. FL2 ist als waagerechte unterbrochene Linie in dem Diagramm eingetragen. Wenn der Betrag der auf das zweite Koppelstück 21 wirkenden externen Kräfte Fext unterhalb der Grenzwerte FL1 bzw. FL2 liegt, dann nimmt die Koppeleinrichtung 17 die in der Figur 2 dargestellte "normale" Position ein. Eine Auslenkung des ersten Wegbegrenzers 25 oder des zweiten Wegbegrenzers 29 relativ zu dem Endstück 23 findet nicht statt. Die Koppeleinrichtung verhält sich wie eine starre Stange. Dies entspricht dem Wert 0 (Null) auf der X-Ache in Figur 5.

Wenn nun, wie in der Figur 3 angedeutet, eine externe Kraft größer FL2 auf das zweite Koppelstück 21 wirkt, dann werden erster Wegbegrenzer 25 und zweiter Wegbegrenzer 29 bezogen auf das erste Koppelstück 19 nach rechts ausgelenkt. Dies entspricht einer Auslenkung in Richtung der positiven X-Achse. Es besteht wegen der linearen Kennlinie der Feder 27 ein linearer Zusammenhang zwischen der Auslenkung in Richtung der positiven X-Achse und der Federkraft der ersten Feder 27. Dieser Zusammenhang ist durch die Linie 37 in der Figur 5 dargestellt.

In entsprechender Weise führt eine in negativer X-Richtung auf das zweite Koppelstück 21 wirkende externe Kraft Fext, deren Betrag größer als der Grenzwert FL1 ist, zu einer Auslenkung in Richtung der negativen X-Achse. Die Kennlinie zwischen Auslenkung und Zunahme der Federkraft der zweiten Feder 31 ist durch die Linie 39 in der Figur 5 dargestellt. Die Kennlinien der beiden Federn 27 und 31 sind bei diesem Ausführungsbeispiel gleich. Dies zeigt sich durch die gleich große Steigung der Linien 37 und 39.

Es ist jedoch auch möglich, dass die Federn 27 und 31 unterschiedliche Federraten aufweisen, so dass die Steigungen der Linien 37 und 39 unterschiedlich sind.

Das kann vorteilhaft sein, wenn die externen Kräfte Fext, die es durch die erfindungsgemäße Koppeleinrichtung abzufangen gilt, in Richtung der negativen X-Achse und in Richtung der positiven X-Achse unterschiedlich groß sind.

Die erfindungsgemäße Vorrichtung kann noch um ein oder zwei nicht dargestellte Dämpfungselemente ergänzt werden. Beispielsweise kann an der Durchführung des ersten Koppelstücks 19 durch den zweiten Wegbegrenzer 19 und/oder an der Durchführung des ersten Koppelstücks 19 durch den ersten Wegbegrenzer 25 ein Dichtring vorgesehen sein, der nicht nur das Eindringen von Schmutz und Wasser in das Innere der Koppeleinrichtung 17 verhindert, sondern gleichzeitig auch durch die Reibung am ersten Koppelstück 19 eine Dämpfungswirkung ausübt. Es ist ohne weiteres möglich, den ersten Wegbegrenzer 25 anders zu dämpfen als den zweiten Wegbegrenzer 29, indem andere Dichtringe eingesetzt werden. Durch eine solche "asymmetrische Dämpfungswirkung" kann somit das Betriebsverhalten der erfindungsgemäßen Koppeleinrichtung weiter optimiert werden.

## Patentansprüche

1. Koppeleinrichtung zur kinematischen Kopplung eines Antriebs (8, 9) mit einer schwenkbaren und/oder linear verschiebbaren Baugruppe, welche eine Bewegung des Antriebs (8, 9) auf die Baugruppe überträgt,
**dadurch gekennzeichnet, dass**
die Koppeleinrichtung (17) ein erstes Koppelstück (19) und ein zweites Koppelstück (21) umfasst, dass das erste Koppelstück (19) und das zweite Koppelstück (21) relativ zueinander verschiebbar sind, und dass das erste Koppelstück (19) und das zweite Koppelstück (21) durch eine Kraftbegrenzungseinrichtung miteinander verbunden sind.

2. Koppeleinrichtung nach Anspruch 1, **dadurch gekennzeichnet, dass** die Kraftbegrenzungseinrichtung einen ersten Wegbegrenzer (25) und eine erste Feder (27) umfasst, dass der erste Wegbegrenzer (25) einen Abstand zwischen erstem Koppelstück (19) und zweitem Koppelstück (21) in einer ersten Bewegungsrichtung (negative X-Achse) des Antriebs (8, 9) begrenzt, und dass die erste Feder (27) zwischen erstem Koppelstück (19) und erstem Wegbegrenzer (25) angeordnet ist, dass die Kraftbegrenzungseinrichtung einen zweiten Wegbegrenzer (29) und eine zweite Feder (31) aufweist, dass der zweite Wegbegrenzer (29) den Abstand zwischen erstem Koppelstück (25) und zweitem Koppelstück (29) in einer der ersten Bewegungsrichtung des Antriebs (8, 9) entgegengesetzten Richtung (positive X-Achse) begrenzt, und dass die zweite Feder (31) zwischen erstem Wegbegrenzer (25) und zweitem Wegbegrenzer (29) angeordnet ist.

3. Koppeleinrichtung nach Anspruch 2, **dadurch gekennzeichnet, dass** der erste Wegbegrenzer (25) und/oder der zweite Wegbegrenzer (29) einen rohrförmigen Grundkörper (25.1, 29.1) und jeweils zwei Stirnflächen (25.2, 29.2, 25.3, 29.31) aufweisen, und dass die Wegbegrenzer (25, 29) koaxial zueinander angeordnet sind und ein Endstück (23) des ersten Koppelstücks (19) aufnehmen.

4. Koppeleinrichtung nach Anspruch 3, **dadurch gekennzeichnet, dass** die erste Feder (27) zwischen dem Endstück (23) des ersten Koppelstücks (19) und einer Stirnfläche (25.2) des ersten Wegbegrenzers (25) angeordnet ist.

5. Koppeleinrichtung nach Anspruch 3 oder 4, **dadurch gekennzeichnet, dass** die zweite Feder (31) dem Endstück (23) des ersten Koppelstücks (19) bzw. einer Stirnfläche (25.3) des ersten Wegbegrenzers (25) und einer Stirnfläche (29.3) des zweiten Wegbegrenzers (29) angeordnet ist.

6. Koppeleinrichtung nach einem der vorhergehenden Ansprüche, **dadurch gekennzeichnet, dass** die erste Feder (27) und/oder die zweite Feder (31) vorgespannt sind.

7. Koppeleinrichtung nach einem der vorhergehenden Ansprüche, **dadurch gekennzeichnet, dass** sie mindestens ein Dämpfungselement aufweist, und dass das mindestens eine Dämpfungselement die Relativbewegungen zwischen erstem und zweitem Koppelstück (19, 21) dämpft.

8. Kraftfahrzeugscheinwerfer (1) mit einem Gehäuse (2), mindestens einem Lichtmodul (4) und einem elektrischen Antrieb (8,9), wobei das mindestens eine Lichtmodul (4) um eine Achse (7) schwenkbar ist, und wobei zwischen dem Lichtmodul (4) und dem Antrieb (8,9) eine Koppeleinrichtung angeordnet ist, welche eine Bewegung des Antriebs (8,9) auf das mindestens eine Lichtmodul (4) überträgt,
**dadurch gekennzeichnet, dass**
die Koppeleinrichtung eine Koppeleinrichtung nach einem der vorhergehenden Ansprüche ist.

9. Kraftfahrzeugscheinwerfer (1) nach Anspruch 8, **dadurch gekennzeichnet, dass** der Antrieb (8) einen Elektromotor (8), insbesondere einen Schrittmotor, und ein Getriebe (9) umfasst.

10. Kraftfahrzeugscheinwerfer (1) nach Anspruch 9, **dadurch gekennzeichnet, dass** das Getriebe (9) ein Zahnstangengetriebe oder ein Schneckengetriebe ist.

11. Kraftfahrzeugscheinwerfer (1) nach einem der Ansprüche 8 bis 10, **dadurch gekennzeichnet, dass** er ein Steuergerat (11) und mindestens einen Positionssensor umfasst, und dass der mindestens eine Positionssensor die Position des Lichtmoduls (4) erfasst und über eine Signalverbindung an das Steuergerät (11) übermittelt.
